# EUROPEAN PATENT APPLICATION

(11) **EP 2 711 228 A1**
(43) Date of publication of application: **26.03.2014**
(21) Application number: 13181102.8
(22) Date of filing: 20.08.2013
(51) Int. Cl.: B60K 35/00, B60K 37/06, A61G 5/04, B60R 11/00, B60R 11/02

(54) **A control module for an electric wheelchair**

(30) Priority: 25.09.2012 GB 201217116
(71) Applicant: Penny & Giles Controls Limited, Dorset BH23 3TG (GB)
(72) Inventor: Downs, Charles Edward, Wimborne, Dorset BH21 2AE (GB); Taylor, David Huw, Sopley, Hampshire BH23 7AZ (GB); Crane, Jolyon Michael, Christchurch, Dorset BH23 1RL (GB); Bennett, Malcolm, Bournemouth, Dorset BH10 5DD (GB)
(74) Representative: Malden, Nicholas

(57) **Abstract**

A control module (300) for an electrically powered wheelchair is configured to generate control signals for the electrically powered wheelchair in response to user input. The control module comprises: a base portion; a joystick (304) configured to generate the control signals corresponding to user movement of the joystick relative to the base portion; and a pivotable screen (302) mount configured to provide a mount on the base portion for a display screen on which information relating to operation of the electrically powered wheelchair can be displayed to a user.

## Description

### FIELD OF THE INVENTION

The present invention relates to a control module for an electric wheelchair, in particular a control module configured to accept user input by means of a joystick and to present the user with various information related to operation of the wheelchair.

### DESCRIPTION OF THE PRIOR ART

The control module for an electrically powered wheelchair typically presents the user with a joystick via which the user can control the movement of the wheelchair. The control module converts directional information generated by the user movement of the joystick into control signals for the power electronics of the electrically powered wheelchair which in turn control the operation of the electric motors coupled to the drive wheels of the electric wheelchair. It is also known for the control module to present the user with various information relating to operation of the electrically powered wheelchair. This information may be presented as simply as illuminating an LED to indicate the on/off status of a component of the electrically powered wheelchair (e.g. the control module itself), but contemporary control modules may be required to present the user with more detailed information, such as by means of a display embedded in the control module. Such a display has the advantage that it caters to the ever increasing desire for richer information display and allowing greater interactivity by the user, however for a control module which is fixed with respect to the electrically powered wheelchair (typically mounted as the extension of an armrest of the wheelchair), a display screen embedded in a control module may not be orientated at the most favourable angle for the user to interact with this screen. Furthermore, whilst it might be desirable to provide larger and more capable display screens, on the one hand the greater the size of the display screen the larger the size of the control module in which it is housed, and on the other hand a display screen is typically a component which requires protection from the impacts which are an inevitable part of usage of an electrically powered wheelchair.

Accordingly it would be desirable to provide an improved arrangement for a display screen forming part of a control module for an electrically powered wheelchair.

### SUMMARY OF THE INVENTION

Viewed from a first aspect, the present invention provides a control module for an electrically powered wheelchair, the control module configured to generate control signals for said electrically powered wheelchair in response to user input, the control module comprising:
a base portion;
a joystick configured to generate said control signals corresponding to user movement of the joystick relative to said base portion; and
a pivotable screen mount configured to provide a mount on said base portion for a display screen on which information relating to operation of said electrically powered wheelchair can be displayed to a user.

The control module is provided with a pivotable screen mount which is configured such that a display screen can be mounted thereon and pivotably reoriented with respect to the base portion of the control module. This has several advantages. Firstly, the dimensions of the display screen are no longer dictated by the dimensions of the base portion of the control module and in particular it is possible to provide a display screen which is wider than the base portion itself, thus enabling a greater range of information and a richer display to be presented to the user. A relatively large display such as this could however be somewhat vulnerable in the context of a control module for a electrically powered wheelchair, because of the inevitable collisions which from time to time occur between the wheelchair (and its various components), and the wheelchair's environment. However, because the display screen is mounted on a pivotable screen mount, this affords a useful degree of protection to the display screen since if the display screen comes into contact with an object external to the wheelchair (e.g. a table edge or a door frame) then the ability of the screen mount to pivot will absorb some of the impact and allow the display screen to move out of the way. Still further, the provision of a pivotable screen mount enables a control module to be provided which is readily reused in a number of positions with respect to the electrically powered wheelchair, in particular can be switched between a left-handed and a right-handed configuration (attached to the respective armrest) and allowing the display screen to be positioned such that the user can easily read the information being presented.

Various embodiments of the present invention are envisaged, in particular some in which the display screen forms part of the control module and others in which the display screen represents an additional component which may be attached when required to the control module. Accordingly, in one embodiment said control module further comprises said display screen, wherein said display screen is fixedly attached to said pivotable screen mount. In such an embodiment the attachment of the display screen mount is essentially permanent and therefore enables a particularly robust and resilient attachment to be provided, thus enhancing the ability of the control module, with its integrated display screen, to withstand the above-mentioned impacts. Furthermore, a permanently attached display screen may be connected to the control module via permanent cabling, providing a more reliable connection between the control module and the display screen.

In other embodiments, in which the display screen is not permanently attached to the pivotable screen mount, said pivotable screen mount comprises an attachment mechanism, said attachment mechanism configured to releasable hold said display screen. A configuration in which the display screen is releasably held by an attachment mechanism of the pivotable screen mount has several advantages. Firstly, this enables the control module to be reconfigured by changing its control screen. Accordingly, manufacturing costs are reduced since the display screen does not form part of the control module. Furthermore different display screens can be attached to the control module depending on the end configuration desired. Secondly, the removability of the display screen represents an anti-theft feature, wherein this valuable component of the control module can be removed when the electrically powered wheelchair is left unattended. Thirdly, the releaseability of the display screen may itself represent a feature for allowing the control module to cope with the above-mentioned impacts, since a sufficiently large impact may cause the display screen to detach from the attachment mechanism, which whilst in itself is not ideal, it is preferable for the display screen to detach than to remain attached but absorb an impacted which will damage it.

The attachment mechanism may be configured to releaseably hold a range of devices as the display screen, and in some embodiments said attachment mechanism is configured to releasably hold as said display screen a device selected from: a mobile telephone; a touchscreen device; and a tablet computing device. Such devices may advantageously be used as the display screen of the control module. On the one hand because the user would already typically own this device, the cost of the control module is reduced by not providing a dedicated screen for the control module, but making use of this existing device and in particular its display functionality. Additionally, the reuse of this user-owned device to provide the display screen for the control module is beneficial to the user, since it avoids a proliferation of display screen devices in the user's presence. Accordingly, the user may for example, when sitting in their wheelchair, use their own mobile telephone as the display screen for the control module of the electrically powered wheelchair, and when not seated in the wheelchair simply take the mobile telephone with them. Furthermore, this embodiment has the advantage that the existing display and data processing capabilities of such devices may be integrated with the control module to provide a richer user experience.

The attachment mechanism provided to releasably hold such a device may take a number of forms, but in one embodiment said attachment mechanism comprises a cradle configured to clasp said device. This cradle can be suitably configured in dependence on the particular configuration of the device to be held. According to another embodiment said attachment mechanism is exchangeable to allow reconfiguration for a different device. This enables the control module to use a range of different devices as its display screen, thus on the one hand reducing the cost of the control module itself and further providing advantageous variability, for example to adapt to different specific devices which may be owned by different end users.

In one embodiment said attachment mechanism comprises a band, said band of comparable width to a clothing belt and configured to provide a mount for a belt clip of said device. Personal devices such as a mobile telephone, a touch screen device and a tablet computing device may be provided by their manufacturer with a belt clip, such that a user may carry the device clipped to their clothing belt. This feature of the device may be advantageously reused by the control module, which in this embodiment provides a band onto which this belt clip may be clipped, thus not only providing a cost effective mechanism for attaching the device to the pivotable screen mount, but furthermore in a fashion which is easily used by the user.

In one embodiment, said control module is configured to communicate wirelessly with said device. The control module can thus take advantage of the wireless communication functionality of the "smart" device, meaning that no wired connection must be provided between the device and the control module. This avoids an additional cable for the user to have to plug in when they mount the device as the display screen and furthermore renders the control module more weather proof by the avoidance of such a cable and/or socket.

In some embodiments said control module is configured to allow control of said device using at least one input device of said control module. For example, the user can then navigate a menu structure of a mobile telephone being used as the display screen via means of the joystick of the control module.

Conversely in some embodiments said control module is configured to allow control of said control module to be performed using said device. For example, a touch screen device mounted as the display screen of the control module may be used by the user as the interface for controlling at least one functional feature of the control module. This presents the user with a particularly familiar and intuitive interface via which the control module may be controlled.

In embodiments in which the display screen is releasably held by an attachment mechanism of the pivotable screen mount, in some embodiments said control module further comprises a display portion configured to display a limited set of information relating to operation of said electrically powered wheelchair, wherein said display portion is obscured when said display screen is mounted on said pivotable screen mount. Accordingly, in the absence of the display screen the user is nevertheless presented with limited information relating to the operation of the electrically powered wheelchair, sufficient that they may still operate the electrically powered wheelchair even if the display screen is not present (or even perhaps lost).

In one embodiment said pivotable screen mount is configured to allow said display screen a range of movement such that an outer edge of said display screen can be positioned within an plan-view area defined by said base portion. As mentioned above, the movement of the pivotable screen mount represents an advantageous mechanism for allowing the display screen to cope with external impacts and the configuration of the pivotable screen mounts such that the display screen can be moved into a position where its outer edge is within a plan-view area defined by the base unit means that the display screen is then effectively protected by the base unit, which will typically be more resiliently constructed than the display screen.

In some embodiments said pivotable screen mount comprises a friction mechanism configured to resist pivoting movement of said pivotable screen mount. This enables the display screen to be positioned at a desired orientation and to remain in that position.

In some embodiments said pivotable screen mount comprises a locking mechanism configured to hold said pivotable screen mount at a selected orientation. This provides a particularly resilient mechanism for holding the pivotable screen at a selected orientation such that for example when driving the wheelchair over rough ground the display screen does not move out of its selected position.

In one such embodiment said base unit comprises a protective shield positioned forward of said pivotable screen mount with respect to a forward-movement direction of said wheelchair. Given that forward movement is the dominant motion of the wheelchair, an impact on the control unit is then most likely to come from the forward direction and the positioning of a protected shield forward of the pivotable screen mount provides the display screen with a degree of protection against such impacts.

In one suction embodiment, said protective shield extends to at least a height of said display screen when mounted on said pivotable screen mount. This protects the display screen from impacts such as those resulting from a table edge, in that the protective shield will encounter the table edge before the display screen does.

In some embodiments said pivotable screen mount is configured to mount said display screen such that pivoting of said display screen is about a substantially off-centre position with respect to said display screen. The mounting of the display screen at a substantially off-centre position can be of advantage to the user, for example, because a display screen may therefore be mounted such that a greater proportion of the display screen is more central to the user when the control module is provided in its typically configuration of being mounted on a left or right armrest position.

In some such embodiments, said pivotable screen mount is configured to allow said display screen to be rotated through 180 degrees in a plane in which the display screen surface lies. This is advantageous because the off-centre positioning of the display screen, whilst moving the display screen more centrally to the user's view, may also impede the user seeking to get in and out of the wheelchair. The rotation of the display screen through 180 degrees will invert the off-centre positioning of the display screen such that where a majority of the display screen was to one side of the pivotable screen mount, it can be moved to the opposite side, thus being out of the way for the user.

In an alternative embodiment said pivotable screen mount is configured to allow said display screen to be slid with respect to the pivotable screen mount. This provides another mechanism by which the off-centre positioning of the display screen may be changed to allow the user to manoeuvre past the display screen.

In embodiments in which the display screen is provided by a smart device such as a mobile telephone a touch screen device or a tablet computing device, in some embodiments said control module further comprises a USB socket. The smart device may thus be easily connected to the control module both for the purposes of information exchange and for recharging the smart device.

In some embodiments said control module further comprises a light source configured to illuminate an area in front of said wheelchair with respect to a forward-movement direction of said wheelchair.

In some embodiments said control module further comprises a socket configured to power a rear light source mounted at a rear side of said wheelchair with respect to a forward-movement direction of said wheelchair.

In some embodiments said control module further comprises a camera socket configured to be coupled to a rear-facing camera mounted on said wheelchair, said control module configured to present an output of said camera on said display screen when said wheelchair is driving in reverse.

### BRIEF DESCRIPTION OF THE DRAWINGS

The present invention will be described further, by way of example only, with reference to embodiments thereof as illustrated in the accompanying drawings, in which:
Figure 1A schematically illustrates a control module with a fixedly attached display screen in one embodiment;
Figure 1B schematically illustrates a control module with a releasably attached display screen in one embodiment;
Figures 2A and 2B schematically illustrate the pivoting of the display screen to allow the base portion to protect the display screen in one embodiment;
Figures 3A and 3B illustrate a friction and locking mechanism via which the display screen may be held in a selected position in one embodiment;
Figure 4A schematically illustrates an attachment mechanism configured to match a belt clip of a mobile telephone in one embodiment;
Figure 4B schematically illustrates exchanging the attachment mechanism in one embodiment;
Figures 5A and 5B schematically illustrate a display portion of the control module which displays a limited set of information when the display portion is absent in one embodiment;
Figure 6A schematically illustrates the rotation of an off-centre mounted display screen through 180°;
Figure 6B schematically illustrates the sliding of an off-centre mounted display screen in one embodiment;
Figure 7 shows a control module having a permanently attached display screen in one embodiment;
Figures 8A-8B show various different views of the control module of Figure 7;
Figures 9A-9D illustrate show a control module configured to grasp a touch screen mobile telephone as its display screen in one embodiment; and
Figures 10A-10D show a control module configured to grasp a touch screen mobile telephone as its display screen in another embodiment.

### DESCRIPTION OF EMBODIMENTS

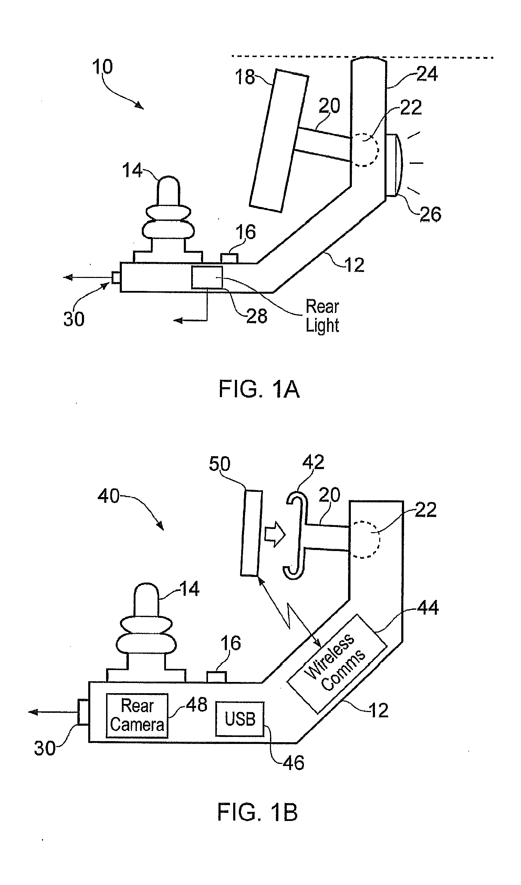

Figure 1A schematically illustrates in side-view a control module for an electrically powered wheelchair in one embodiment. This control unit 10 comprises a base portion 12 which forms the main body of the control module and on which is mounted a joystick 14 via which the user of the electrically powered wheelchair gives direction control commands. The control module also comprises at least one further button 16, via which the user can exert control signals (for example to switch components of the electrically powered wheelchair on and off). The control module 10 further comprises a display screen 18 which is fixed to a pivotable screen mount 20, which is configured to pivot around a ball-and-socket type joint 22 in the upper portion of the control module. The upper portion of the control module 24 itself extends upwards to a height greater than that of the display screen 18, such that this upper portion 24 forms a protective shield for the display screen. Accordingly, if the wheelchair manoeuvres close to, for example, a table top, the protective screen 24 will encounter the edge of the table top rather than the display screen 18. On the forward side of the upper portion of the control module there is also provided a light source 26 for illuminating the forward direction with respect to the wheelchair. The control module also comprises a socket 28 (which may for example be a jack socket) configured to provide a power source for a rear (red) light mounted on the rear of the wheelchair. The output voltage provided to this socket can be varied (for example by pulse width modulation) to enable the brightness of the rear facing light to be varied, such as when the wheelchair is braking). A connection point 30 provides an exit via which a cable from the control module passes to the power electronics of the wheelchair.

Figure 1B schematically illustrates another embodiment viewed in a side view, in which a control module 40 is configured to make use of a separate device 50 to provide the display screen on which information relating to operation of the electrically powered wheelchair is displayed to the user. Items which are unchanged with respect to the Figure 1A embodiment are given the same reference numerals here and are not further described for brevity. In this Figure 1B embodiment the pivotable screen mount 20 further comprises a cradle 42 which is configured to grasp the device 50 and hold it firmly in place. In this example embodiment, the device 50 is a touch screen device which is able to communicate wirelessly (e.g. via Wi-Fi or Bluetooth) and the control module 40 is provided with a wireless communications unit 44 such that the control module 40 and the device 50 can communicate with one another wirelessly. In addition, the control module 40 comprises as part of its base portion a USB socket 46. This USB socket 46 can be used to provide a charging source for the device 50, or to couple the device 50 via a wired connection to the control module 40. Whether communicating with one another wirelessly or via a wired connection, the control module 40 is configured to allow the user to interact with the device 50 by means of the joystick 14 and buttons 16, so that for example the user can navigate the menu structure of the touch screen device 50 using the joystick 14 and to select highlighted items using one of the buttons 16. Additionally, the control module 40 is configured to allow at least some of its control functionality to be controlled via the touch screen interface of the device 50. This may for example be provided by installing a suitable application ("app") onto the touch screen device 50. Opening this app on the touch screen device 50 thus presents the user with a dedicated interface suitable for controlling the functionality of the control module (and hence the electrically powered wheelchair). The control module 40 also comprises a camera socket configured to be coupled to a rear-facing camera mounted on the wheelchair, and the control module 40 is configured to present an output of this camera on the display screen 50 when the wheelchair is driving in reverse.

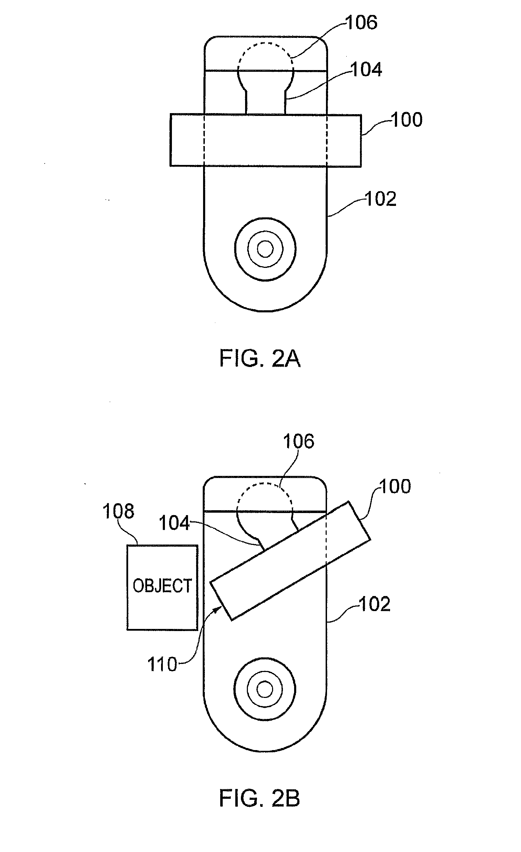

Figures 2A and 2B schematically illustrate a control module in one embodiment viewed in plan-view, showing how the range of movement afforded to the display screen via the pivotable screen mount can protect the display screen from impacts from external objects. As shown in Figure 2A the display screen 100 is arranged in a central position with respect to the base portion 102 since the pivotable screen mount 104 and ball-and socket 106 are similarly centrally positioned. However turning to Figure 2B, it can be seen that when an external object 108 comes close to the base portion 102 of the control module, the display screen 100 is able to pivot (by means of the pivotable screen mount 104 and ball-and-socket joint 106) into a position in which outer edge 110 of the display screen is positioned within the plan-view area defined by the base portion 102. This thus protects the display screen 110 from further impact from the object 108. This may for example occur in a situation in which the control module schematically illustrated in Figures 2A and 2B is positioned on the lefthand side arm rest of an electrically powered wheelchair and the object 108 brushes past the outer (left) side of the wheelchair as the wheelchair is driven past this object.

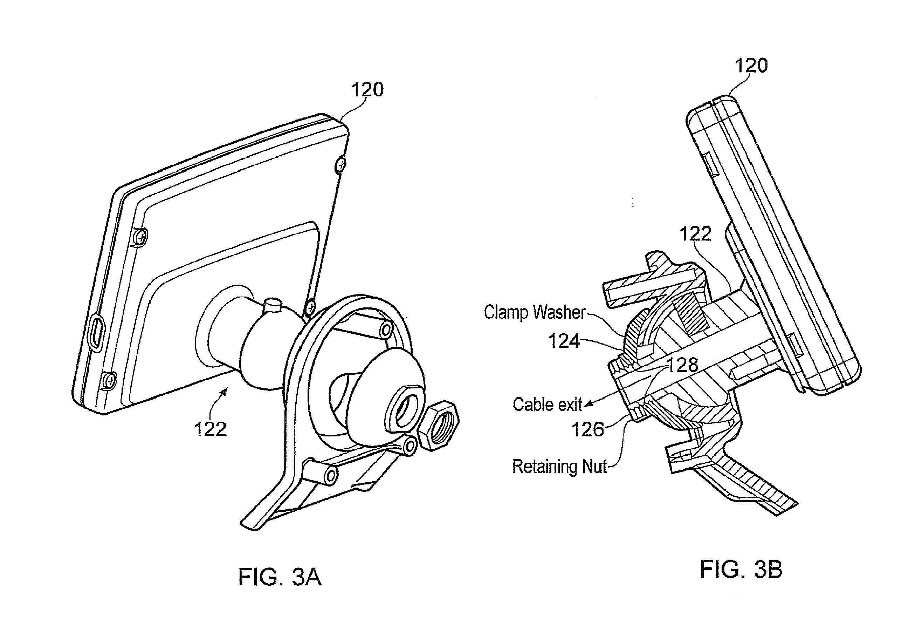

Figures 3A and 3B show mechanisms via which the display screen may be held in a desired orientation. In this embodiment in which the display screen 120 is permanently attached to the pivotable screen mount 122, the ball-and-socket joint comprises a clamp washer 124 threaded onto a threading 128, such that adjustment of the position of the clamp washer 124 on the threading 128 applies a varying degree of pressure between the "ball" and the "socket". A retaining nut 126 is also threaded onto the threading 128 to lock the clamp washer 124 into a selected position. Accordingly, the display screen 120 can be positioned in a desired orientation and a moderate degree of pressure from the clamp washer 124 can provide a friction mechanism via which the screen moderately resists movement out of this position, or a greater degree of pressure applied via the clamp washer 124 can hold the display screen 120 in a locked position.

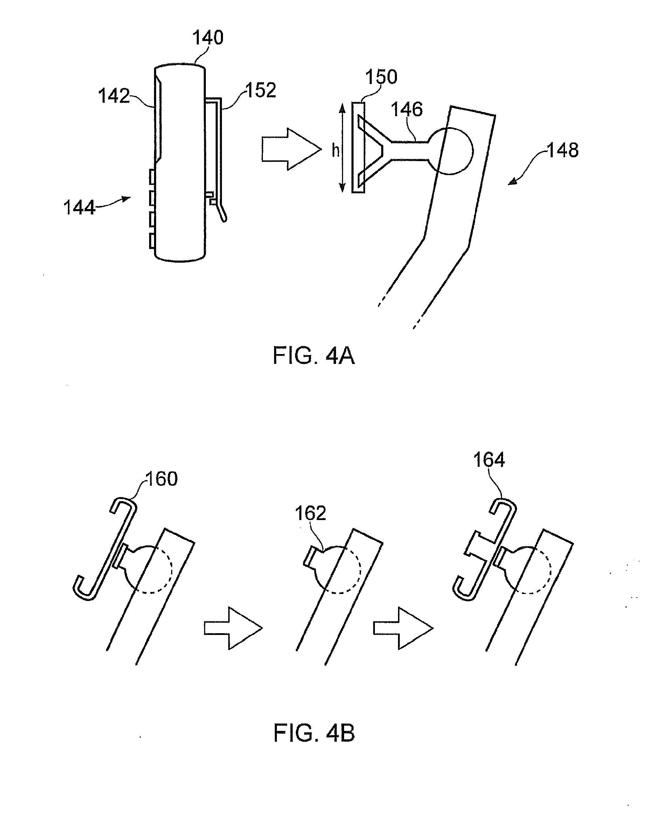

Figure 4A schematically illustrates an embodiment in which a device such as a mobile telephone 140 (having a display screen 142 and input buttons 144) is used as a removable display screen to be mounted on the pivotable screen mount 146 of a control module 148 (only partially shown). In this embodiment the pivotable screen mount 146 comprises a band 150 which is provided to mimic a portion of a clothing belt (and hence has a height of approximately 1.5 inches in this embodiment) such that a belt clip 152 of the mobile telephone 140 can be clipped onto the "belt portion" 150, thus using the belt clip mechanism of the mobile telephone 140 as the attachment mechanism for the display screen 142 onto the pivotable screen mount 146.

It will be recognised that a cradle provided to hold a particular device as the removable display screen for the control module will typically be specifically configured to match the physical geometry of that device. Figure 4B schematically illustrates how a cradle 160 may be removed from the pivotable screen mount 162 and replaced with a different cradle 164, in order to accept a different device as the removable display screen.

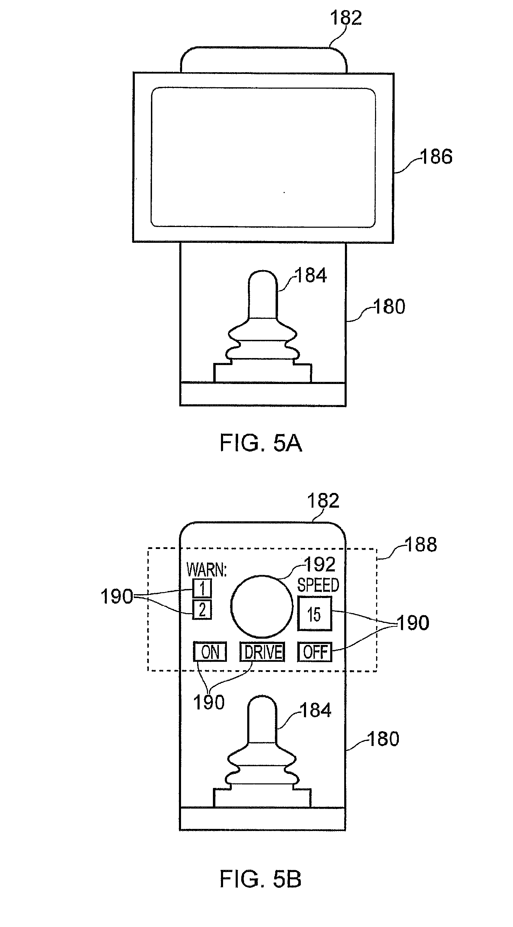

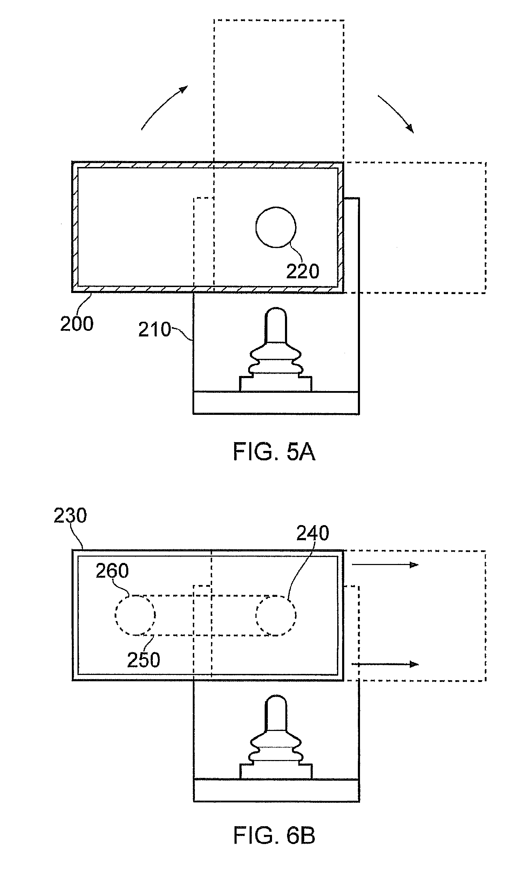

Figures 5A and 5B schematically illustrate two views of a control module in an embodiment in which the display screen is removable. In particular, Figures 5A and 5B show an elevation view of the control module approximately from the point of view of a user sitting in the seat of the electrically powered wheelchair. Accordingly, in Figure 5A, in which the display screen 186 is present, the user sees the display 186, behind which the base portion 180 can be seen including the extension 182 thereof which forms a protected shield positioned forward of the display screen 186. The joystick 184 is in the foreground for the user. Turning to Figure 5B, the display screen 186 has been removed (the dashed box 188 showing where screen 186 was). In this embodiment, the base portion of 180 of the control module is provided with a limited set of display items 190 which are revealed when the screen 186 is removed. Item 192 represents the pivotable screen mount viewed end on in the absence of the mounted display screen 186. This set of display items 190 provide the user with some basic functionality regarding the operation of the control module and the electrically powered wheelchair, such that even in the absence of the display screen 186, the user is none the less able to operate the electric wheelchair.

Figures 6A and 6B schematically illustrate embodiments in which the display screen is mounted substantially off-centre in its usual operational position. For example, as shown in Figure 6A, the display screen 200 is mounted such that a substantial portion of the display screen 200 overhangs the main body of the control module 210 to its left. This can for example be a useful configuration when the control module is mounted in a right-hand configuration, i.e. mounted on the right-hand arm rest of the electrically powered wheelchair. The display screen 200 therefore extends inwardly (with respect to the seated position of the user) such that the extension of the display screen 200 is into the more central field of vision of the user. Whilst this may be convenient in terms of viewing the display screen 200 in its operational position, this position of the display screen may also get in the way of the user seeking to get into and out of the wheelchair and accordingly the pivotable screen mount 220 is configured to allow the display screen to rotate through 180° into a position in which the "overhang" of the display screen is now on the opposite side of the control module. The user can then enter and exit the wheelchair unimpeded by the display screen. Alternatively, or in addition, this rotation of the display screen also allows the display screen to be positioned in a "portrait" orientation (at 90°) and in an inverted "landscape" orientation (at 180°), according to the user's viewing preference for the display screen.

Figure 6B schematically illustrates an alternative embodiment in which the display screen is also mounted substantially off-centre with respect to the control module, but wherein the display screen 230 is configured to slide with respect to the pivotable screen mount 240 in order to enable it to be moved into the "opposite" configuration in which it overhangs the other side of the control module. For this purpose, the connection between the pivotable screen mount 240 and the display screen 230 comprises a slide track 250, along which the pivotable screen mount can slide into its opposite end 260 in order to move the display screen 230 across.

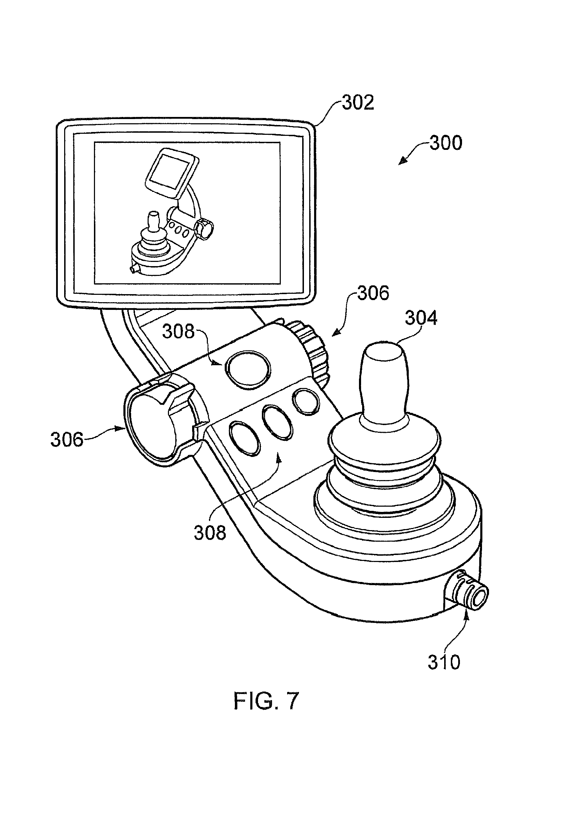

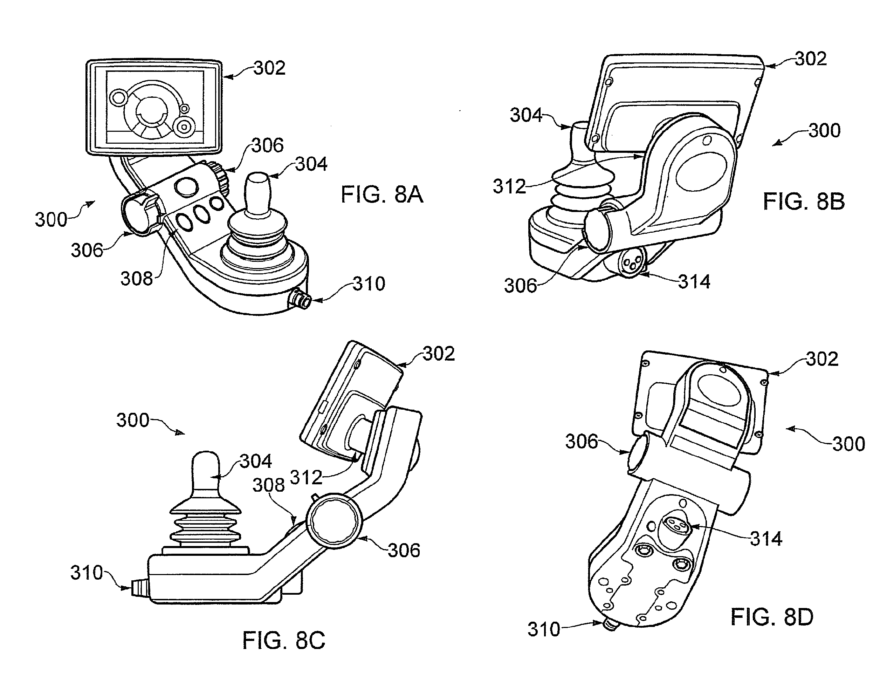

Figures 7, and 8A-8D show one embodiment in which a control module is provided with a permanently attached display screen 302 from a number of different angles. The figures show the joystick 304, jog/selection dials 306, user input buttons 308, cable outlet 310, pivotable screen mount 312 and charger/communications socket 314.

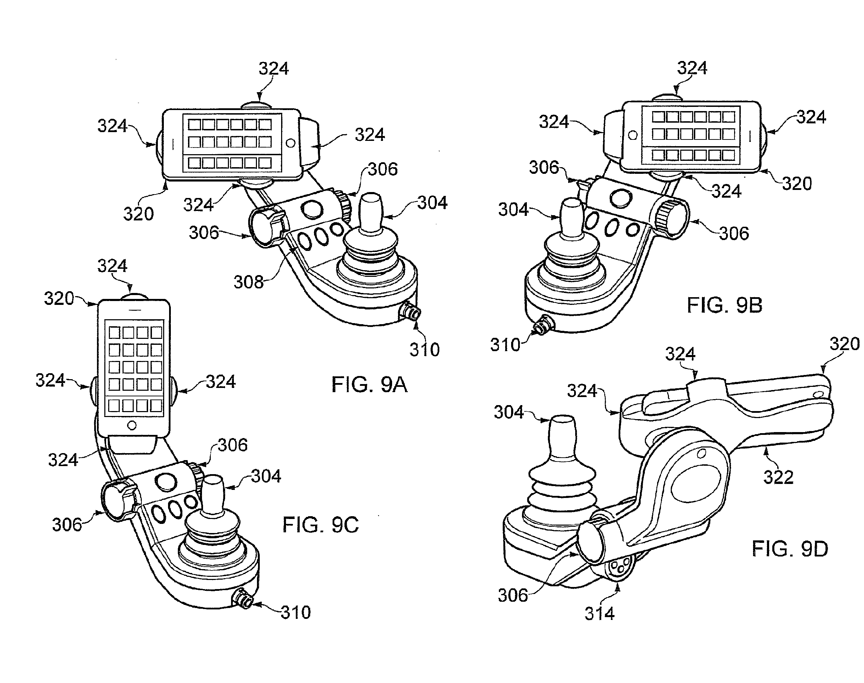

Figures 9A-9B show different views of an embodiment in which a touch screen device 320 is used as a removable display screen for the control module. A cradle 322 is provided with clips 324 which are configured to clip around the edge of the touch screen device 320 to hold it securely in position on the pivotable screen mount. Items 304, 306, 308, 310, 312 and 314 are the same as in figures 8A-8D.

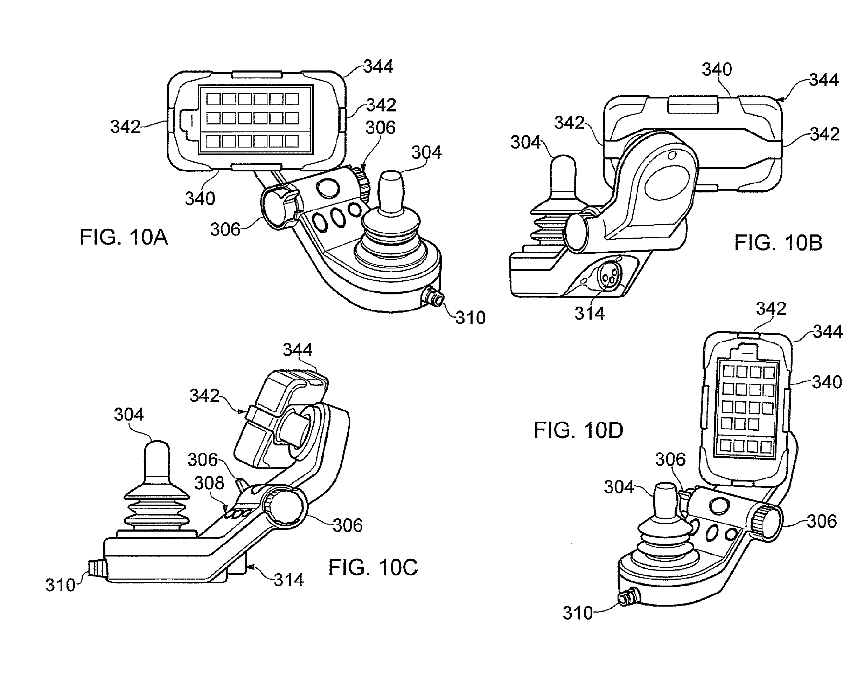

Figures 10A-10D presents an alternative embodiment to that shown in Figures 9A-9D in which a different attachment mechanism is provided which clips around the length of the touch screen device 340. The attachment mechanism comprises clips 342 which engage with the longitudinal ends of the display screen 340. The touch screen device 340 is further provided with a rubber housing 344 configured to protect the device against impact

Although particular embodiments have been described herein, it will be appreciated that the invention is not limited thereto and that many modifications and additions thereto may be made within the scope of the invention. For example, various combinations of the features of the following dependent claims could be made with the features of the independent claims without departing from the scope of the present invention.

Various aspects of the invention of the invention are set out in the following numbered clauses:
1. A control module for an electrically powered wheelchair, the control module configured to generate control signals for said electrically powered wheelchair in response to user input, the control module comprising:
   a base portion;
   a joystick configured to generate said control signals corresponding to user movement of the joystick relative to said base portion; and
   a pivotable screen mount configured to provide a mount on said base portion for a display screen on which information relating to operation of said electrically powered wheelchair can be displayed to a user.
2. A control module as in clause 1, wherein said control module further comprises said display screen, wherein said display screen is fixedly attached to said pivotable screen mount.
3. A control module as in clause 1, wherein said pivotable screen mount comprises an attachment mechanism, said attachment mechanism configured to releaseably hold said display screen.
3. A control module as in clause 2, wherein said attachment mechanism is configured to releasably hold as said display screen a device selected from:
   a mobile telephone;
   a touchscreen device; and
   a tablet computing device.
4. A control module as in any preceding clause, wherein said pivotable screen mount is configured to mount said display screen such that pivoting of said display screen is about a substantially off-centre position with respect to said display screen.
5. A control module as in clause 4, wherein said pivotable screen mount is configured to allow said display screen to be rotated through 180 degrees in a plane in which the display screen surface lies.
6. A control module as in clause 4, wherein said pivotable screen mount is configured to allow said display screen to be slid with respect to said pivotable screen mount.
7. A control module as in clause 3, wherein said control module further comprises a USB socket.
8. A control module as in any preceding clause, wherein said control module further comprises a light source configured to illuminate an area in front of said wheelchair with respect to a forward-movement direction of said wheelchair.
9. A control module as in any preceding clause, wherein said control module further comprises a socket configured to power a rear light source mounted at a rear side of said wheelchair with respect to a forward-movement direction of said wheelchair.
10. A control module as in any preceding clause, wherein said control module further comprises a camera socket configured to be coupled to a rear-facing camera mounted on said wheelchair, said control module configured to present an output of said camera on said display screen when said wheelchair is driving in reverse.

## Claims

1. A control module for an electrically powered wheelchair, the control module configured to generate control signals for said electrically powered wheelchair in response to user input, the control module comprising:
a base portion;
a joystick configured to generate said control signals corresponding to user movement of the joystick relative to said base portion; and
a pivotable screen mount configured to provide a mount on said base portion for a display screen on which information relating to operation of said electrically powered wheelchair can be displayed to a user.

2. A control module as claimed in claim 1, wherein said pivotable screen mount comprises an attachment mechanism, said attachment mechanism configured to releaseably hold said display screen.

3. A control module as claimed in claim 2, wherein said attachment mechanism is configured to releasably hold as said display screen a device selected from:
a mobile telephone;
a touchscreen device; and
a tablet computing device.

4. A control module as claimed in claim 3, wherein said attachment mechanism comprises a cradle configured to clasp said device.

5. A control module as claimed in claim 3, wherein said attachment mechanism is exchangeable to allow reconfiguration for a different device.

6. A control module as claimed in claim 3, wherein said attachment mechanism comprises a band, said band of comparable dimensions to a clothing belt and configured to provide a mount for a belt clip of said device.

7. A control module as claimed in claim 3, wherein said control module is configured to communicate wirelessly with said device.

8. A control module as claimed in claim 3, wherein said control module is configured to allow control of said device using at least one input device of said control module.

9. A control module as claimed in claim 3, wherein said control module is configured to allow control of said control module to be performed using said device.

10. A control module as claimed in any one of claims 2-9, wherein said control module further comprises a display portion configured to display a limited set of information relating to operation of said electrically powered wheelchair, wherein said display portion is obscured when said display screen is mounted on said pivotable screen mount.

11. A control module as claimed in any preceding claim, wherein said pivotable screen mount is configured to allow said display screen a range of movement such that an outer edge of said display screen can be positioned within an plan-view area defined by said base portion.

12. A control module as claimed in any preceding claim, wherein said pivotable screen mount comprises a friction mechanism configured to resist pivoting movement of said pivotable screen mount.

13. A control module as claimed in any preceding claim, wherein said pivotable screen mount comprises a locking mechanism configured to hold said pivotable screen mount at a selected orientation.

14. A control module as claimed in any preceding claim, wherein said base unit comprises a protective shield positioned forward of said pivotable screen mount with respect to a forward-movement direction of said wheelchair.

15. A control module as claimed in claim 15, wherein said protective shield extends to at least a height of said display screen when mounted on said pivotable screen mount.
